# EUROPÄISCHE PATENTSCHRIFT

(11) **EP 0 655 935 B1**
(45) Veröffentlichungstag und Bekanntmachung des Hinweises auf die Patenterteilung: **03.03.1999**
(21) Anmeldenummer: 94918728.0
(22) Anmeldetag: 21.06.1994
(51) Int. Cl.: B01D 29/01, B01D 29/68

(54) **DRUCKFILTER MIT GLEICHMÄSSIG ANGEPRESSTEM RÜCKSPÜLKOPF**
PRESSURE FILTER WITH A BACK-FLUSHING HEAD EXERTING A UNIFORM CONTACT PRESSURE
FILTRE SOUS PRESSION AVEC UNE TETE DE RINCAGE A CONTRE-COURANT APPLIQUEE UNIFORMEMENT

(30) Priorität: 24.06.1993 DE 4320952
(43) Veröffentlichungstag der Anmeldung: 07.06.1995
(73) Patentinhaber: Maurer, Mike, D-58332 Schwelm (DE); Maurer, Uwe, D-58332 Schwelm (DE)
(72) Erfinder: MAURER, Uwe, D-58332 Schwelm (DE)
(74) Vertreter: Patentanwälte Hauck, Graalfs, Wehnert, Döring, Siemons
(86) Internationale Anmeldenummer: DE9400704
(87) Internationale Veröffentlichungsnummer: WO9500227

(56) Entgegenhaltungen:
- DE-A- 3 734 245
- US-A- 4 085 051

## Beschreibung

Die vorliegende Erfindung betrifft ein Druckfilter mit den Merkmalen des Oberbegriffs des Patentanspruchs 1.

Ein aus der EP-A-0 479 077 bekanntes Druckfilter arbeitet mit einer kontinuierlichen Abreinigung der Filterfläche und ist insbesondere für die Abtrennung von Feststoffen aus Suspensionen bestimmt. Zum grundsätzlichen Aufbau eines solchen Druckfilters gehört eine Vielzahl druckfester Filterelemente, die den Fluidraum vom Filtratraum trennen und die Filterfläche bilden, sowie die an die Reject-Ableitung angeschlossene Rückspüleinrichtung mit einem Rückspülkopf, der einen Teil der Filterfläche gegenüber dem Fluidraum abdichtet. Der Rückspülkopf und die Filterfläche sind relativ zueinander bewegbar. Das zu filtrierende Fluid wird mit einem Druck p₁ dem Druckfilter zugeführt und steht im Fluidraum unter diesem Druck p₁ an den Filterelementen an. Das Filtrat läuft mit einem niedrigeren Druck p₂ aus dem Filtratraum ab. In der Reject-Ableitung sowie dem vom Rückspülkopf begrenzten Rückspülraum ist ein Druck p₃ einstellbar, der stets kleiner ist als der Druck p₂ im Filtratraum. Unter der Druckdifferenz zwischen dem Fluidraumdruck p₁ und dem Filtratraumdruck p₂ erfolgt eine Filtration, wobei an der Filterfläche Feststoffe abgeschieden werden und eine Deckschicht bilden. Diese Deckschicht wird kontinuierlich abgereinigt, und zwar durch eine Rückspülung, d.h. eine Umkehrung der Flußrichtung durch die Filterelemente. Die Rückspülung erfolgt an dem Teil der Filterfläche, der vom Rückspülkopf gegenüber dem Fluidraum abgedichtet wird, und zwar unter der Druckdifferenz zwischen dem Druck p₂ im Filtratraum und dem Druck p₃ im Rückspülraum. Der Filtrationsvorgang an der übrigen Filterfläche des Druckfilters wird durch die Rückspülung nicht beeinträchtigt.

Bei dem bekannten Druckfilter weist der Rückspülraum mindestens eine zur Filterfläche hin schlitzförmig offene Absaugkammer auf. Diese Absaugkammer ist als längliche, sich von einer zentralen Antriebswelle für den Rückspülkopf radial nach außen erstreckende Kammer ausgebildet. Beim Drehen des Rückspülkopfes überstreicht die schlitzförmige Öffnung in Form eines vom Zentrum des Druckfilters ausgehenden radialen Strahles die Filterfläche. Es hat sich nunmehr gezeigt, daß es Schwierigkeiten bereitet, an jedem radialen Punkt des leisten- bzw. plattenförmigen Rückspülkopfes den gleichen Andruck gegen die Filterfläche sicherzustellen. So ist der Druck bedingt durch die zentrische Lagerung des Rückspülkopfes im mittleren Bereich höher als im radial äußeren Bereich. Insbesondere hat es sich in der Praxis gezeigt, daß die radial äußeren Endbereiche des leisten- oder plattenförmigen Kopfes dazu neigen, sich von der Filterfläche abzuheben, so daß ein einwandfrei durchgeführter Rückspülvorgang nicht mehr gewährleistet ist.

Ein Druckfilter mit den Merkmalen des Oberbegriffs des Patentanspruchs 1 ist aus der US-A-4 085 051 bekannt. Die bei diesem Druckfilter vorgesehene Rückspüleinrichtung besitzt einen Rahmen, in dem ein Hohlkörper installiert und mit dem Rahmen über Federn verbunden ist. Die Federn sind an einem Ende am Rahmen befestigt, während das andere Ende derselben an einem Arm fixiert ist, welcher fest am Hohlkörper angebracht ist. Die Federn drücken den Hohlkörper elastisch gegen das zugehörige Filterelement.

Der Erfindung liegt die Aufgabe zugrunde, ein Druckfilter der angegebenen Art zu schaffen, bei dem ein gleichmässiger Andruck eines zentrisch gelagerten Rückspülkopfes über dessen gesamte radiale Abmessung sichergestellt ist.

Diese Aufgabe wird erfindungsgemäß bei einem Druckfilter der angegebenen Art durch die kennzeichnenden Merkmale des Patentanspruchs 1 gelöst.

Durch die erfindungsgemäß vorgesehene Federstütze gelingt es, gleichmäßige Andruckverhältnisse des Rückspülkopfes in bezug auf die Filterfläche sicherzustellen. Hierdurch kann der Rückspülvorgang unter der gewünschten Druckdifferenz zwischen dem Druck p₂ im Filtratraum und dem Druck p₃ im Rückspülraum einwandfrei durchgeführt werden, ohne daß sich durch ein Abheben des Rückspülkopfes in dessen radial äußeren Bereichen von der Filterfläche Störungen in bezug auf die Aufrechterhaltung der gewünschten Druckdifferenz ergeben. Hierdurch kann die auf der Filterfläche gebildete Deckschicht kontinuierlich abgereinigt werden, und zwar besonders gleichmäßig, da gleichmäßige Andruckverhältnisse in radialer Richtung sichergestellt werden. Ein Abheben der radial äußeren Teile des Rückspülkopfes von der Filterfläche tritt nicht mehr auf.

Die von der Federstütze ausgeübte Vorspannkraft ist einstellbar. Hierdurch läßt sich der Anpreßdruck in Abhängigkeit von den vorhandenen Verhältnissen auswählen und an die jeweiligen Verhältnisse entsprechend anpassen. Stellt man fest, daß von Hause aus relativ gleichmäßige Anpreßverhältnisse in radialer Richtung vorhanden sind, wird die Federstütze so eingestellt, daß hierdurch nur ein geringfügiger zusätzlicher Druck auf die äußeren radialen Bereiche aufgebracht wird. Zeigen die radial äußeren Bereiche des Rückspülkopfes eine starke Tendenz zum Abheben von der Filterfläche, wird ein entsprechend hoher Anpreßdruck eingestellt.

Es versteht sich, daß der normale Anpreßdruck des Rückspülkopfes über dessen zentrale Lagerung bei der Installation des Kopfes vorgegeben wird. Die erfindungsgemäß vorgesehene Federstütze stellt sicher, daß über die gesamte Radialabmessung des Rückspülkopfes gleichmäßige Druckverhältnisse vorhanden sind, d. h. bringt einen zusätzlichen Druck auf die radial äußeren Bereiche des Rückspülkopfes auf, falls dies erforderlich sein sollte. Insgesamt wird durch die erfindungsgemäß vorgesehene Federstütze eine Aussteifung des entsprechenden Rückspülkopfes mit dem Effekt erreicht, daß die mit der Filterfläche in Kontakt stehenden Teile des Rückspülkopfes gleichmäßig auf der Filterfläche gleiten.

In Weiterbildung der Erfindung ist der mit der Filterfläche in Kontakt tretende Teil des Rückspülkopfes elastisch gelagert. In Zusammenwirkung mit der erfindungsgemäß vorgesehenen Federstütze werden hierdurch besonders gute Ergebnisse erzielt, da sich durch die zusätzliche elastische Lagerung des Kontaktteiles bzw. der Kontaktteile des Rückspülkopfes Unebenheiten ausgleichen lassen, ohne das Ziel einer gleichmäßigen Anpressung über die gesamte Radialerstreckung des Rückspülkopfes zu verfehlen. Selbst bei auftretenden Unebenheiten auf der Filterfläche lassen sich daher auch die radial äußeren Bereiche des Kontaktteiles bzw. der Kontaktteile gut an die Filterfläche anpressen, so daß insgesamt der gewünschte gleichmäßige Andruckeffekt erzielt wird.

Es versteht sich, daß mit Kontaktteil bzw. Kontaktteilen der- oder diejenigen Teile des Rückspülkopfes gemeint sind, die die schlitzförmige Rückspülöffnung oder entsprechende Öffnungen umgeben und auf der Filterfläche gleiten.

Die vorgespannte Federstütze ist zentrisch am Rückspülkopf und an dessen radialem Endbereich gelagert. Je nach Ausgestaltung des Rückspülkopfes als Leiste oder in der Form von mehreren Leisten bzw. als Platte sind ein oder mehrere Federstützen vorhanden, so daß bei der Ausbildung als Platte alle radial äußeren Umfangszonen angedrückt werden. In Umfangsrichtung ergeben sich daher ebenfalls gleichmäßige Anpreßverhältnisse. Die Federstütze kann radial außen entweder am Rückspülkopf oder in dessen Ebene gelagert sein. Bei Lagerung am Rückspülkopf, d. h. über dessen Mittelebene, ergibt sich ein größerer Hebelarm, der den gewünschten Druckeffekt verstärkt. Andererseits wird hierfür ein höherer Platzbedarf benötigt.

Die Federstütze ist vorzugsweise radial innen und radial außen nur festgeklemmt, d. h. nicht über zusätzliche Befestigungseinrichtungen am Rückspülkopf angebracht. Vorzugsweise erfolgt die Lagerung radial innen über einen teilsphärischen Zapfen in einer teilsphärischen Lagerpfanne. Hierdurch wird eine entsprechende Flexibilität der Lagerung erreicht. Die Lagerpfanne ist zweckmäßigerweise am zentralen Lager des Rückspülkopfes angeordnet. Bei einer Vielzahl von Federstützen ist eine Vielzahl von derartigen Lagerpfannen um das zentrale Lager des Rückspülkopfes herum angeordnet.

Die Federstütze selbst ist erfindungsgemäß vorzugsweise so ausgebildet, daß sie eine Stange aufweist, die in einen mindestens eine Feder enthaltenden Zylinder eingreift und von der Feder auf Druck beaufschlagt wird. Zur Druckeinstellung läßt sich die Feder austauschen, oder es können mehrere an die jeweiligen Verhältnisse angepaßte Federn angeordnet sein. Vorzugsweise finden Tellerfedern Verwendung, die eine kolbenartige Erweiterung am Ende der Stange, die in abgedichteter Weise im Zylinder geführt ist, beaufschlagen.

Eine besonders bevorzugte Ausführungsform eines erfindungsgemäß ausgebildeten Druckfilters zeichnet sich dadurch aus, daß der Rückspülkopf eine Trägerplatte umfaßt, an der mindestens eine die Filterfläche überstreichende Hohlleiste angeordnet ist, die die schlitzförmige Öffnung aufweist, und daß die Federstütze den radial äußeren Bereich der Trägerplatte elastisch in Richtung auf die Filterfläche drückt. Bei dieser Ausführungsform wirkt somit die Federstütze nicht unmittelbar auf die mit der schlitzförmigen Öffnung versehene Hohlleiste ein, sondern statt dessen auf deren Trägerplatte. Vorzugsweise kommt eine Vielzahl von Federstützen zum Einsatz, die in gleichmäßigen Abständen um den Umfang der Trägerplatte verteilt sind. Um den Filtervorgang nicht zu behindern, besitzt die Trägerplatte vorzugsweise radiale Ausnehmungen, die ihr etwa die Form eines Malteserkreuzes verleihen. Hierbei sind beispielsweise jedem Arm des Kreuzes zwei Federstützen zugeordnet.

Am radial äußeren Rand der Trägerplatte ist zweckmäßigerweise mindestens eine Lasche angeordnet, gegen die die Federstütze gespannt ist. Diese Art der Fixierung der Federstützen an der Trägerplatte hat sich als vorteilhaft erwiesen.

Vorstehend wurde eine Ausführungsform des Rückspülkopfes beschrieben, bei der dieser Leisten- oder Plattenform besitzt, in jedem Falle aber von seinem zentralen Lager radial frei nach außen kragt und, abgesehen von den Kontaktstellen mit der Filterfläche, kein weiteres Auflager auf der Filterfläche besitzt. Bei der nachfolgend beschriebenen Ausführungsform besitzt der leisten- oder plattenförmige Rückspülkopf jedoch an seinem radialen Endbereich ein auf dem die Filterfläche aufweisenden Filterelement gleitendes oder rollendes Lager. Der Andruck dieses Lagers wird ebenfalls über die Federstütze verstärkt bzw. moduliert, so daß sich diesbezüglich eine entsprechende Wirkung wie bei der auskragenden Leiste bzw. Trägerplatte ergibt.

Bei einer bevorzugten Ausgestaltung dieser Ausführungsform umfaßt das Lager mindestens eine Rolle, die auf einem erhöhten Ring des Filterelementes abrollt. Rolle und Ring des Filterelementes bilden somit eine feste Führung, die ein zu starkes Anpressen des Rückspülkopfes an die Filterfläche verhindern. Vorzugsweise ist die Rolle in ihrem Andruck gegen das Filterelement verstellbar, und zwar zusätzlich zu der Federstütze über weitere Einstellmittel.

Wie bereits vorstehend erwähnt, wirkt die erfindungsgemäß vorgesehene Federstütze vorzugsweise mit einem elastisch gelagerten Kontaktteil bzw. mehreren elastisch gelagerten Kontaktteilen des Rückspülkopfes zusammen. Durch diese elastische Lagerung wird ein entsprechender Ausgleich bei Unebenheiten erzielt. Diese elastische Lagerung des mit der Filterfläche in Kontakt tretenden Teiles des Rückspülkopfes ist vorzugsweise durch eine elastisch gelagerte Platte an der Unterseite des Rückspülkopfteiles gebildet. Dieses plattenförmige Kontaktteil umgibt die jeweilige schlitzförmige Öffnung an der Unterseite des Rückspülkopfes, über die der Rückspülvorgang durchgeführt wird. Hierdurch paßt sich die Platte sehr genau an die Filterfläche an, so daß eine entsprechende Abdichtung gegenüber dem Fluidraum erreicht wird.

In Weiterbildung der Erfindung ist die Platte durch ein Silikonlager gelagert, vorzugsweise durch ein Silikonlager, das durch umhüllte Silikongelkissen gebildet ist. Die Platte ist zweckmäßigerweise beidseitig geführt und nicht am Rückspülkopf befestigt, so daß sich - unter Abstützung durch die gegenüberliegende Filterfläche - eine schwimmende Lagerung der Platte ergibt, die damit ihrer Ausgleichsfunktion vollständig gerecht werden kann.

Die Erfindung wird nachfolgend anhand von Ausführungsbeispielen in Verbindung mit der Zeichnung im einzelnen erläutert. Es zeigen:
- Figur 1: einen Vertikal schnitt durch ein erfindungsgemäß ausgebildetes Druckfilter;
- Figur 2: eine Ansicht des Druckfilters der Figur 1 mit entfernter Gehäusewand und teilweise entferntem Rückspülkopf sowie Filterelement;
- Figur 3: einen schematischen Schnitt durch das Zentrallager des Rückspülkopfes mit Darstellung der Lagerung einer Federstütze;
- Figur 4: einen Schnitt durch einen mit einer Hohlleiste versehenen Teil der Trägerplatte des Rückspülkopfes, der eine Ausführungsform der elastischen Lagerung der Kontaktplatte zeigt;
- Figur 5: einen Schnitt durch einen Teil einer Trägerplatte mit Hohlleiste, der eine weitere Ausführungsform der elastischen Lagerung einer Kontaktplatte zeigt; und
- Figur 6: einen Teillängsschnitt durch den Endbereich einer Trägerplatte, die mit einem Rollenlager versehen ist.

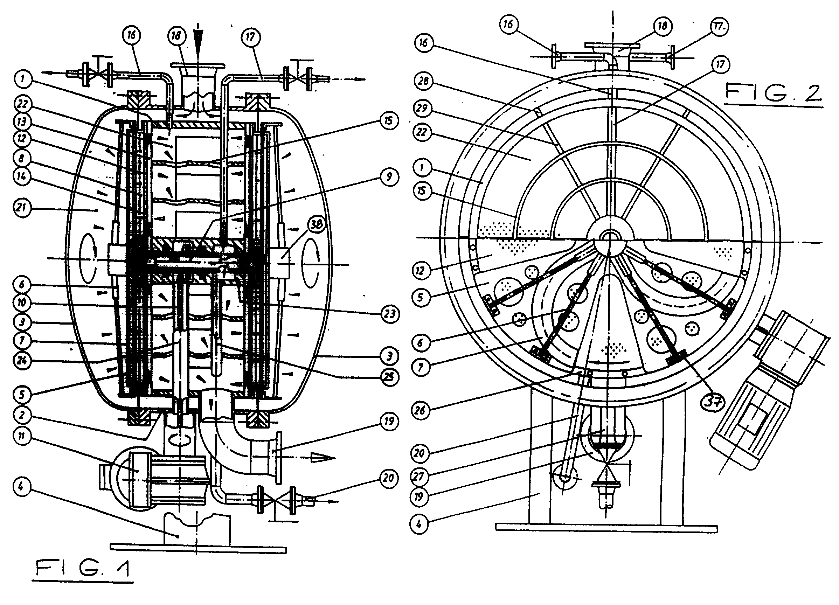

Das in den Figuren 1 und 2 dargestellte Druckfilter besitzt einen Tragring 1, an dessen Innenseite Stützringe 15 und Rippen 29 so miteinander verbunden sind, daß mittig eine Nabe 23 gehalten wird. Der Tragring 1 ist an seinen beiden offenen Seiten durch je ein kreisförmiges Filterelement 12 geschlossen, das sich aus einer ersten und zweiten Lochplatte 13 zusammensetzt, zwischen denen sich ein geeignetes Filtervlies aus textilem Material befindet. Diese Filterelemente bilden jeweils eine Filterfläche. Das ringförmige Gebilde aus dem Tragring 1 und den beiden Filterelementen 12 ist in einem Gehäuse 3 angeordnet, das eine Fluidkammer 21 bildet, die über einen Zulauf 18 mit dem zu filtrierenden Fluid versorgt wird. Innerhalb des ringförmigen Gebildes aus Tragring 1 und Filterelementen 12 befindet sich eine Filtratkammer, an die eine Filtratauslaßleitung 19 angeschlossen ist.

Durch die Nabe 23 erstreckt sich eine Hohlwelle 9, die an beiden Enden offen ist. Sie wird durch Gleitlager, Kugellager und Dichtungen geführt, die verhindern, daß Fluid in den Hohlwellenbereich gelangen kann. In die offenen Enden der Hohlwelle 9 sind Übergangsstutzen gesetzt, die sich zusammen mit der Hohlwelle drehen. An diesen sich flanschförmig erweiternden Übergangsstutzen ist jeweils eine Trägerplatte 5 drehfest fixiert, die später im einzelnen beschrieben wird.

Das Innere der Hohlwelle steht mit einer Entlüftungsleitung 17 und mit einer Reject-Ableitung 25 in Verbindung. Beide Leitungen sind durch die Filtratkammer geführt und außerhalb des Druckfilters jeweils mit Absperrventilen (bei 20 gezeigt) versehen. Auch von der Filtratkammer führt eine Entlüftungsleitung 16, die ein geeignetes Absperrventil aufweist, aus dem Druckfilter heraus.

Das ringförmige Gebilde aus Tragring 1, den beiden Filterelementen 12 und den Stützringen 15 und Rippen 29 sowie die entsprechenden Leitungen 16, 17, 19, 25 sind stationär im Gehäuse 3 angeordnet.

Das Druckfilter weist zwei Rückspülköpfe auf, von denen jeder einem Filterelement 12 zugeordnet ist und dessen Filterfläche überstreicht. Die Rückspülköpfe bestehen aus einer Trägerplatte 5 und einer Vielzahl von spiralförmig gekrümmten Rückspülleisten 8, die an der Trägerplatte befestigt sind. Die Form der Rückspülleisten 8 ist in Figur 2 zu erkennen, wobei dort der über der Trägerplatte 5 befindliche Ableitteil 7 der Rückspülleisten gezeigt ist. Die Trägerplatte 5 weist zwischen den einzelnen Rückspülleisten 8 Ausnehmungen auf, damit Fluid aus der Fluidkammer 21 durch die Filterflächen in die Filtratkammer dringen kann. Die Rückspülleisten 8 weisen in ihrem Inneren Absaugkammern auf und sind an ihrer der Filterfläche zugewandten Seite mit einer spiralförmig gekrümmten schlitzförmigen Öffnung versehen, mittels der der Rückspülvorgang durchgeführt wird. Über die spiralförmige schlitzförmige Öffnung wird die als Deckschicht auf der Filterfläche ausgebildete Substanz abgesaugt und durch in der Trägerplatte 5 ausgebildete Öffnungen dem Reject-Ableitteil 7 der Rückspülleisten zugeführt, von wo aus das Reject radial nach innen in die Hohlwelle 9 und von dort über die Reject-Ableitung 25 aus dem Druckfilter herausgelangt.

Der Antrieb der Rückspülköpfe erfolgt über die Hohlwelle 9, die auf ihrer Außenseite mit einem Tellerrad verbunden ist, das mit einem Kegelrad einer Antriebswelle 10 kämmt, welche in einem durch die Fluidkammer und Filtratkammer geführten Rohr 24 angeordnet ist. Die Antriebswelle 10 wird über einen geeigneten Antriebsmotor 11 in Drehungen versetzt. Das ganze Druckfilter ist auf einem geeigneten Gestell 4 angeordnet.

Wie die Figuren 1 und 2 desweiteren zeigen, ist jeder Rückspülkopf mit einer Vielzahl von Federstützen 6 versehen, die sich von der Mitte des Rückspülkopfes bis zu dessen radialem Endbereich erstrecken. Die Federstützen 6 erstrecken sich hierbei zwischen Laschen 37, die am Rand einer jeden Trägerplatte 5 befestigt sind, und einem zentral an der jeweiligen Trägerplatte angeordneten Abstützblock 38, wobei die Federstützen zwischen den zentralen Abstützblock 38 und die zugehörige Lasche 37 geklemmt sind. Die Federstützen 6 stehen unter Vorspannung und üben eine entsprechende Kraft auf die Lasche 37 aus, so daß auf den radial äußeren Randbereich der zugehörigen Trägerplatte 5 ein Moment ausgeübt wird, das diesen Randbereich der Trägerplatte in Richtung auf die entsprechende Filterfläche drückt.

Figur 2 zeigt, daß jedem Arm der Trägerplatte 5 zwei Federstützen zugeordnet sind, die sich über die entsprechenden Hohlleisten erstrecken. Die Federstützen sorgen dafür, daß die gekrümmt ausgebildeten Hohlleisten mit der entsprechenden gekrümmten schlitzförmigen Öffnung überall gleichmäßig an die Filterfläche angedrückt werden, so daß die für die Rückspülung benötigte Druckdifferenz aufrechterhalten wird.

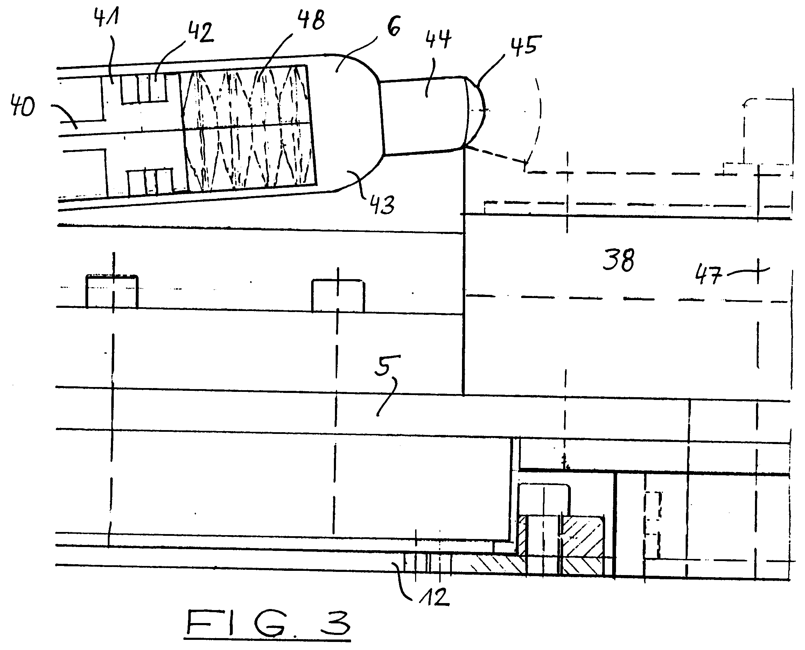

Den genauen Aufbau der Federstützen 6 zeigt Figur 3. Man erkennt, daß die Federstützen eine Stange 40 besitzen, die an einem Ende mit einer kolbenartigen Erweiterung 41 versehen ist, welche in abgedichteter Weise (Dichtungen 42) in einem Zylinder 43 geführt ist. Im Zylinder befindet sich eine Reihe von Tellerfedern 48, die die kolbenartige Erweiterung 41 und somit die Stange 40 mit einem in der Figur nach links gerichteten Druck beaufschlagen, so daß die Stange einen entsprechenden Druck auf die zugehörige Lasche 37 (in Figur 3 nicht gezeigt) ausübt. Der Zylinder 43 weist an seinem von der Stange 40 abgewandten Ende einen Zapfen 44 mit halbkugelförmiger Endfläche auf, die in eine entsprechend ausgebildete halbkugelförmige Lagerschale 45 greift. Diese Lagerschale ist an dem zentralen Lagerblock 38 ausgebildet, der über eine zentrale Schraube 47 an der Trägerplatte befestigt ist. Es versteht sich, daß an dem zentralen Lagerblock 38 eine Vielzahl von halbkugelförmigen Vertiefungen 45 angeordnet ist, die die entsprechenden Federstützenzylinder aufnehmen. Durch das auf diese Weise gebildete Kugelgelenk können sich die Federstützen relativ zum Rückspülkopf frei drehen.

Die Federstützen 5 wirken mit einer elastischen Lagerung für die jeweiligen Kontaktelemente des Rückspülkopfes mit der Filterfläche zusammen. Bei der hier dargestellten Ausführungsform sind die Kontaktelemente als von der Trägerplatte 5 getragene Hohlleisten ausgebildet, an deren Unterseite sich eine schlitzförmige Öffnung zur Durchführung des Rückspülvorganges befindet. Die Hohlleisten mit der zugehörigen schlitzförmigen Öffnung sind gekrümmt ausgebildet.

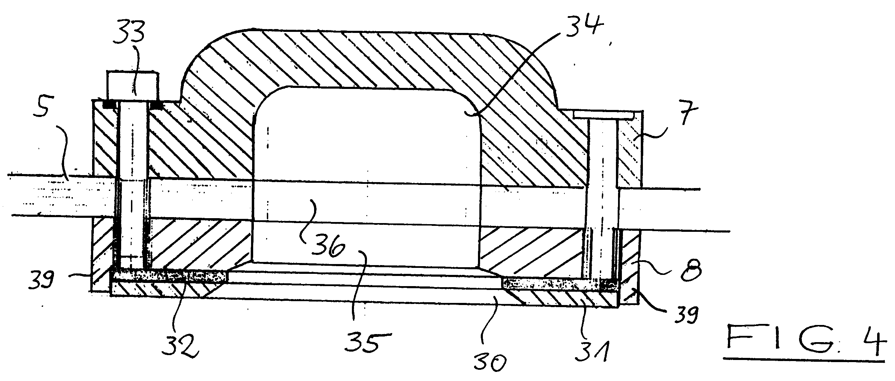

Figur 4 zeigt einen Querschnitt durch eine derartige Hohlleiste. Man erkennt die Trägerplatte 5, über der der Ableitteil 7 und unter der der Absaugteil 8 der Rückspülleiste (Hohlleiste) angeordnet ist. Die an der Unterseite des Absaugteils 8 angeordnete schlitzförmige Öffnung 30 verengt sich zur Trägerplatte hin in eine Absaugkammer 35, die über eine Öffnung 36 in der Trägerplatte in einen Ableitkanal 34 übergeht, der zur Hohlwelle führt.

An der der Filterfläche zugewandten Seite der Leiste ist eine elastisch gelagerte Kontaktplatte bzw. Schwingplatte 31 angeordnet, die bei 32 elastisch gelagert ist. Die elastische Lagerung wird hierbei durch ein Silikonkissen gebildet. Man erkennt, daß die Schwingplatte 31 über zwei seitliche Führungselemente 39 so geführt ist, daß sie sich in der Figur nur auf und ab bewegen kann. Im übrigen ist die Schwingplatte 31 nicht an der Hohlleiste befestigt, sondern wird durch den Kontakt mit der Filterfläche gehalten.

Durch die Federstützen 6 werden die radial äußeren Bereiche der Rückspülleisten gegen die Filterfläche gepreßt. Das Silikonlager 32 sorgt hierbei für eine gleichmäßige Pressung, da durch die Nachgiebigkeit der Schwingplatte 31 entsprechende Unebenheiten auf der Filterfläche ausgeglichen werden können.

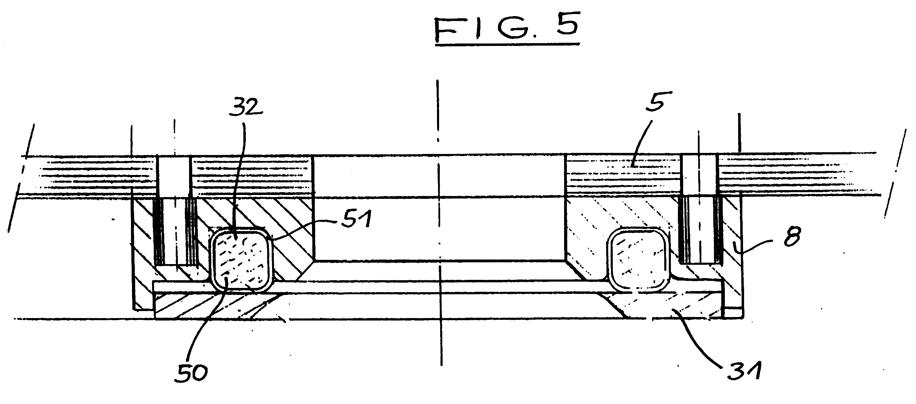

Figur 5 zeigt einen entsprechenden Schnitt durch eine Hohlleiste wie Figur 4, wobei hier der obere Teil der Leiste nicht dargestellt ist. Diese Ausführungsform weist eine etwas andere Ausführungsform eines elastischen Lagers 32 für die Kontakt- oder Schwingplatte 31 auf. Hierbei besteht das elastische Lager aus zwei länglichen Silikonkissen, die jeweils aus einer Umhüllung 51 bestehen, in der ein Silikongel 50 angeordnet ist. Die entsprechenden Lagerkissen sind in einer Ausnehmung des Unterteiles 8 der Rückspülleiste angeordnet. Auch hier bewirkt das Lager wiederum eine gewisse Auf- und Abbeweglichkeit der Schwingplatte 31 zum Ausgleich von Unregelmäßigkeiten auf der Filterfläche.

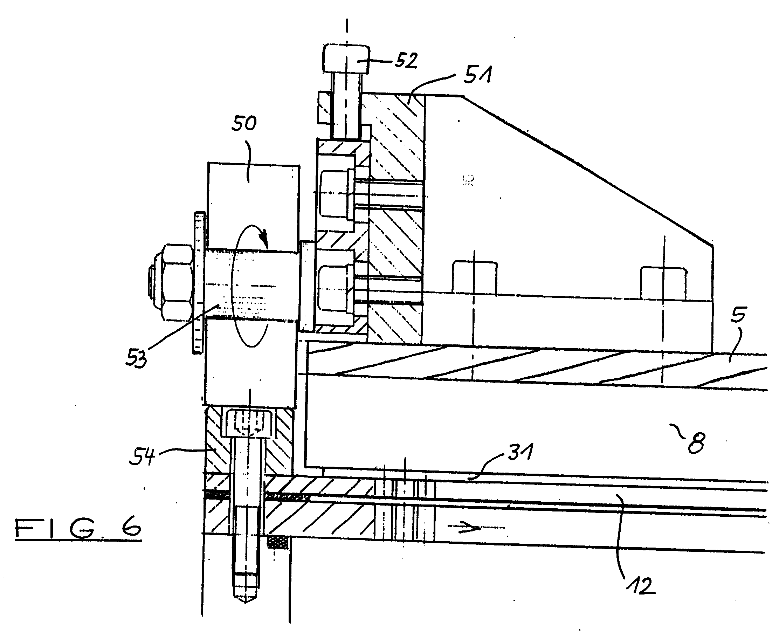

Figur 6 zeigt einen Radialschnitt durch den Randbereich einer Trägerplatte 5. Bei dieser Ausführungsform ist die Trägerplatte nicht kragarmartig gelagert, sondern weist an ihrem radialen Ende eine Lagerrolle 50 auf, die über einen Zapfen 53 drehbar an einem Befestigungselement 51 gelagert ist, das wiederum auf der Trägerplatte 5 befestigt ist. Über eine Schraube 52 läßt sich die Lagerrolle 50 in der Höhe regulieren. Beim Drehen der Trägerplatte rollt sich die Lagerrolle 50 auf einem erhabenen Ring 54 ab, der am Rand der Lochplatte 12 des zugehörigen Filterelementes angeordnet ist. Auch bei dieser Ausführungsform ist die entsprechende Rückspülleiste, deren Unterteil bei 8 gezeigt ist, mit einer elastisch gelagerten Schwingplatte 31 versehen, die die Lochplatte 12 kontaktiert. Die entsprechenden Federstützen (in Figur 6 nicht gezeigt) wirken mit der elastisch gelagerten Schwingplatte 31 und der Rolle 50 zusammen, um einen gleichmäßigen Andruck der Rückspülleisten an die Filterfläche sicherzustellen. Hierbei sind daher drei Einstellmöglichkeiten (Federstütze, elastisches Lager der Schwingplatte und Lagerrolle) vorhanden, so daß sich eine sehr genaue Einstellmöglichkeit des Anpreßdrucks des Rückspülkopfes ergibt.

## Patentansprüche

1. Druckfilter mit einem Fluidraum (21) mit einem Fluidzulauf (18), mindestens einer eine Vielzahl von Öffnungen aufweisenden Filterfläche im Fluidraum (21), deren eine Seite vom Fluidraum (21) und deren andere Seite von einem Filtratraum begrenzt ist, der einen Filtratablauf (19) aufweist, und einer Rückspüleinrichtung mit einem die Filterfläche überstreichenden und einen Teil der Filterfläche gegenüber dem Fluidraum abdichtenden leisten- oder plattenförmigen Rückspülkopf, der einen mindestens eine zur Filterfläche hin schlitzförmig offene Absaugkammer aufweisenden Rückspülraum begrenzt, welcher mit einer Reject-Ableitung (25) in Verbindung steht, sowie einer elastisch wirkenden Druckeinrichtung, die den Rückspülkopf axial in Richtung auf die Filterfläche drückt, dadurch gekennzeichnet, daß die Druckeinrichtung durch mindestens eine, sich radial geneigt erstreckende und zentrisch am Rückspülkopf sowie an dessen radialem Endbereich gelagerte vorgespannte Federstütze (6) gebildet ist, die den radial äußeren Rand des Rückspülkopfes (5) elastisch in Richtung auf die Filterfläche drückt und deren Vorspannkraft einstellbar ist.

2. Druckfilter nach Anspruch 1, dadurch gekennzeichnet, daß der mit der Filterfläche in Kontakt tretende Teil des Rückspülkopfes elastisch gelagert ist.

3. Druckfilter nach einem der vorangehenden Ansprüche, dadurch gekennzeichnet, daß die Federstütze (6) radial innen über einen teilsphärischen Zapfen (44) in einer teilsphärischen Lagerpfanne (45) gelagert ist.

4. Druckfilter nach einem der vorangehenden Ansprüche, dadurch gekennzeichnet, daß die Federstütze (6) eine Stange (40) aufweist, die in einen mindestens eine Feder (48) enthaltenden Zylinder (43) eingreift und von der Feder (48) auf Druck beaufschlagt wird.

5. Druckfilter nach einem der vorangehenden Ansprüche, dadurch gekennzeichnet, daß an einer Trägerplatte (5) für den Rückspülkopf mindestens eine die Filterfläche überstreichende Hohlleiste angeordnet ist, die die schlitzförmige Öffnung (30) aufweist.

6. Druckfilter nach Anspruch 5, dadurch gekennzeichnet, daß am radial äußeren Rand der Trägerplatte (5) mindestens eine Lasche (37) angeordnet ist, gegen die die Federstütze (6) gespannt ist.

7. Druckfilter nach einem der vorangehenden Ansprüche, dadurch gekennzeichnet, daß der leisten- oder plattenförmige Rückspülkopf an seinem radialen Endbereich ein auf dem die Filterfläche aufweisenden Filterelement gleitendes oder rollendes Lager umfaßt.

8. Druckfilter nach Anspruch 7, dadurch gekennzeichnet, daß das Lager mindestens eine Rolle (50) umfaßt, die auf einem erhöhten Ring (54) des Filterelementes abrollt.

9. Druckfilter nach Anspruch 7 oder 8, dadurch gekennzeichnet, daß die Rolle (50) in ihrem Andruck gegen das Filterelement verstellbar ist.

10. Druckfilter nach einem der Ansprüche 2 bis 9, dadurch gekennzeichnet, daß die elastische Lagerung des mit der Filterfläche in Kontakt tretenden Teiles des Rückspülkopfes durch eine elastisch gelagerte Platte (31) an der Unterseite des Rückspülkopfteiles gebildet ist.

11. Druckfilter nach Anspruch 10, dadurch gekennzeichnet, daß die Platte (31) durch ein Silikonlager (32) gelagert ist.

12. Druckfilter nach Anspruch 11, dadurch gekennzeichnet, daß das Silikonlager (32) durch umhüllte Silikongelkissen gebildet ist.

13. Druckfilter nach einem der Ansprüche 10 bis 12, dadurch gekennzeichnet, daß die Platte (31) beidseitig geführt ist.

## Claims

1. A pressure filter comprising a fluid compartment (21) having a fluid inlet (18), at least one filter surface in the fluid compartment (21), said filter surface having a plurality of apertures, one side of said filter surface being restricted by the fluid compartment (21) and the other side of said filter surface being restricted by a filtrate compartment having a filtrate outlet (19), and a backwashing unit comprising a slat-like or plate-like washing head sweeping over the filter surface and sealing a part of the filter surface with respect to the fluid compartment, said backwashing head restricting a backwashing compartment having at least one suction chamber open to the filter surface in a slot-like manner, said backwashing compartment having connected thereto a reject drain (25), and a resiliently acting pressure means pressing the backwashing head axially towards the filter surface, characterized in that the pressure means is formed by at least one biassed spring strut (6) which extends in a radially inclined manner and is supported centrally at the backwashing head and at the radial end portion thereof, said spring strut (6) resiliently pressing the radial outer edge of the backwashing head (5) towards the filter surface and the biassing force of which being adjustable.

2. The pressure filter according to claim 1, characterized in that the part of the backwashing head contacting the filter surface is resiliently supported.

3. The pressure filter according to one of the preceding claims, characterized in that the spring strut (6) is supported radially inside in a part-spherical bearing socket (45) by means of a part-spherical stud (44).

4. The pressure filter according to one of the preceding claims, characterized in that the spring strut (6) includes a rod (40) engaging into a cylinder (43) containing at least one spring (48) and on which a pressure is applied by the spring (48).

5. The pressure filter according to one of the preceding claims, characterized in that at least one hollow slat sweeping over the filter surface is disposed at a carrier plate (5) for the backwashing head, said hollow slat including the slot-like aperture (30).

6. The pressure filter according to claim 5, characterized in that at least one bracket (37) is disposed at the radial outer edge of the carrier plate (5), the spring strut (6) being tensioned against the bracket (37).

7. The pressure filter according to one of the preceding claims, characterized in that the slat-like or plate-like backwashing head has a bearing at its radial end portion which slides or rolls on the filter element having the filter surface.

8. The pressure filter according to claim 7, characterized in that the bearing includes at least one roller (50) rolling on a raised ring (54) of the filter element.

9. The pressure filter according to claim 7 or 8, characterized in that the pressure of the roller (50) against the filter element is adjustable.

10. The pressure filter according to one of the claims 2 to 9, characterized in that the resilient support of the part of the backwashing head contacting the filter surface is formed by a resiliently supported plate (31) at the lower side of the part of the backwashing head.

11. The pressure filter according to claim 10, characterized in that the plate (31) is supported by a silicon bearing (32).

12. The pressure filter according to claim 11, characterized in that the silicon bearing (32) is formed by sheathed silicon gel cushions.

13. The pressure filter according to one of the claims 10 to 12, characterized in that the plate (31) is guided on both sides.

## Revendications

1. Filtre sous pression comportant une enceinte à fluide (21) dotée d'une amenée de fluide (18), au moins une surface de filtration dotée d'un grand nombre d'ouvertures disposée dans l'enceinte à fluide (21), et dont l'une des faces est adjacente à l'enceinte à fluide (21), son autre face étant adjacente à une enceinte à filtrat qui présente une évacuation de filtrat (19), ainsi qu'un dispositif de rinçage à contre-courant doté d'une tête de rinçage à contre-courant en forme de latte ou de plaque qui racle la surface de filtration et assurant l'étanchéité d'une partie de la surface de filtration vis-à-vis de l'enceinte à fluide, et qui délimite une chambre de rinçage à contre-courant présentant au moins une enceinte d'aspiration ouverte en forme de fente sur la surface de filtration et qui communique avec une conduite de rejet (25), ainsi qu'un dispositif de poussée travaillant élastiquement et repoussant la tête de rinçage à contre-courant axialement en direction de la surface de filtration, caractérisé en ce que le dispositif de poussée est formé par au moins un appui élastique (6) précontraint qui s'étend obliquement dans le sens radial et s'appuie au centre de la tête de rinçage à contre-courant ainsi que sur sa zone d'extrémité radiale, lequel appui élastique pousse élastiquement en direction de la surface de filtration le bord de la tête de rinçage à contre-courant (5) qui est situé radialement à l'extérieur, la force de précontrainte étant ajustable.

2. Filtre sous pression selon la revendication 1, caractérisé en ce que la partie de la tête de rinçage à contre-courant qui entre en contact avec la surface de filtration est supportée élastiquement.

3. Filtre sous pression selon l'une des revendications précédentes, caractérisé en ce que l'appui élastique (6) est monté radialement à l'intérieur d'une cuvette de montage (45) en forme de partie de sphère, par l'intermédiaire d'un tourillon (44) en forme de partie de sphère.

4. Filtre sous pression selon l'une des revendications précédentes, caractérisé en ce que l'appui élastique (6) présente une tige (40) qui s'engage dans un cylindre (43) contenant au moins un ressort (48), et une pression lui est appliquée par le ressort (48).

5. Filtre sous pression selon l'une des revendications précédentes, caractérisé en ce qu'au moins une latte creuse raclant la surface de filtration est disposée contre une plaque de support (5) de la tête de rinçage à contre-courant, et présente une ouverture (30) en forme de fente.

6. Filtre sous pression selon la revendication 5, caractérisé en ce que sur le bord de la plaque de support (5) qui est situé radialement à l'extérieur est disposée au moins une éclisse (37) contre laquelle l'appui élastique (6) est serré.

7. Filtre sous pression selon l'une des revendications précédentes, caractérisé en ce que sur sa zone d'extrémité radiale, la tête de rinçage à contre-courant en forme de latte ou de plaque comporte un support coulissant ou roulant sur l'élément de filtre présentant la surface de filtration.

8. Filtre sous pression selon la revendication 7, caractérisé en ce que le support comporte au moins un rouleau (50) qui roule sur un anneau en saillie (54) de l'élément de filtration.

9. Filtre sous pression selon les revendications 7 ou 8, caractérisé en ce que la poussée du rouleau (50) contre l'élément de filtration est ajustable.

10. Filtre sous pression selon l'une des revendications 2 à 9, caractérisé en ce que le montage élastique de la partie de la tête de rinçage à contre-courant qui entre en contact avec la surface de filtration est formé par une plaque (31) montée élastiquement sur la face inférieure de la partie de la tête de rinçage à contre-courant.

11. Filtre sous pression selon la revendication 10, caractérisé en ce que la plaque (31) est soutenue par un support (32) en silicone.

12. Filtre sous pression selon la revendication 11, caractérisé en ce que le support (32) en silicone est formé par des coussinets de gel de silicone enveloppés.

13. Filtre sous pression selon l'une des revendications 10 à 12, caractérisé en ce que la plaque (31) est guidée des deux côtés.
